# EUROPEAN PATENT APPLICATION

(11) **EP 3 184 415 A1**
(43) Date of publication of application: **28.06.2017**
(21) Application number: 16154601.5
(22) Date of filing: 08.02.2016
(51) Int. Cl.: B64C 1/30

(54) **MULTI-ROTOR PASSENGER-CARRYING AIRCRAFT WITH FOLDABLE AIRCRAFT ARM**

(30) Priority: 25.12.2015 CN 201521115478 U
(71) Applicant: Guanghou Ehang Intelligent Technology Co., Ltd., Guangzhou Guangdong 510663 (CN)
(72) Inventor: DU, Hao, Guangzhou Guangdong 510663 (CN); HU, Huazhi, Guangzhou Guangdong 510663 (CN); LI, Zhiyi, Guangzhou Guangdong 510663 (CN)
(74) Representative: Noble, Nicholas

(57) **Abstract**

A multi-rotor passenger-carrying aircraft with foldable aircraft arm, including an aircraft body, a fixing mechanism, a connector and an aircraft arm. The fixing mechanism is fastened on the aircraft body, an end of the aircraft arm is articulated to the fixing mechanism, which is provided with a first mounting hole, and the aircraft arm is provided with a second mounting hole. When the aircraft arm is in a folded state, one end of the connector is removably attached to the fixing mechanism through a first fastener, and the other end is removably attached to the aircraft arm through a second fastener, keeping the fixing mechanism at a first angle with the aircraft arm. When the aircraft arm is in a working state, a third fastener is passes through both the first and second mounting holes to cause the fixing mechanism to be fixedly connected to the aircraft arm and kept at a second angle with the aircraft arm.

## Description

### FIELD

The present disclosure relates to the technical field of aircraft, and more particularly, to a multi-rotor passenger-carrying aircraft with foldable aircraft arm.

### BACKGROUND

With the rapid development of aircraft technology recently, all kinds of aircrafts have sprung up. Among them, the small passenger-carrying aircraft (for example, personal aircraft) is growing fast in popularity due to its characters of dexterity, lightness and easy operation. Such aircraft generally has an aircraft arm fastened on the aircraft body, for example, usually by welding. In this way, the connection causes a large space occupied by the aircraft, which is inconvenient for transportation and storage, and cause a lot of trouble to users.

### SUMMARY

Based on above, the objective of the present disclosure is to provide a multi-rotor passenger-carrying aircraft with foldable aircraft arm to overcome the defects of the prior art, which is simple in structure, and is convenient for transportation and storage.

The present disclosure provides a multi-rotor passenger-carrying aircraft with foldable aircraft arm, including an aircraft body, a fixing mechanism, a connector and an aircraft arm, wherein the fixing mechanism is fastened on the aircraft body, an end of the aircraft arm is articulated to the fixing mechanism, the fixing mechanism is provided with at least one first mounting hole, the aircraft arm is provided with at least one second mounting hole; wherein when the aircraft arm is in a folded state, one end of the connector is removably attached to the fixing mechanism through a first fastener, and the other end of the connector is removably attached to the aircraft arm through a second fastener, so that the fixing mechanism is kept to be at a first angle with the aircraft arm; and when the aircraft arm is in a working state, a third fastener is adapted to pass through both the first and second mounting holes to cause the fixing mechanism to be fixedly connected to the aircraft arm and kept at a second angle with the aircraft arm.

In one embodiment, one end of the connector is provided with a third mounting hole, and the first fastener is adapted to pass through both the first mounting hole and the third mounting hole to cause the end of the fastener attached to the fixing mechanism; and the other end of the connector is provided with a fourth mounting hole, and the second fastener is adapted to pass through both the second mounting hole and the fourth mounting hole to cause the other end of the fastener attached to the aircraft arm.

In one embodiment, the fixing mechanism includes a first fastener and a second fastener, the first fastener and the second fastener are arranged on the aircraft body and spaced apart from each other, a rotation shaft is connected between the first fastener and the second fastener, and an end of the aircraft arm is articulated to the rotation shaft.

In one embodiment, the fixing mechanism is provided with two mounting holes correspondingly arranged on the first fastener and the second fastener respectively.

In one embodiment, an end of the aircraft arm is provided with a sleeve, two lugs are arranged at the bottom of the sleeve and spaced apart from each other, and the aircraft arm is provided with two second mounting holes correspondingly arranged on the two lugs respectively.

In one embodiment, the first fastener is a pin, rivet or bolt.

In one embodiment, the second fastener a pin, rivet or bolt.

In one embodiment, the third fastener a pin, rivet or bolt.

The advantages or principle of the above technical solution are illustrated below.

For the above multi-rotor passenger-carrying aircraft with foldable aircraft arm, the aircraft arm is articulated to the fixing mechanism that the angle between the aircraft arm and the fixing mechanism is adjustable, to achieve switching of the aircraft arm between the folded state and the working state. During the transportation and storage of the aircraft, the space occupied by the aircraft can be effectively reduced by mounting the connector through the first and second fasteners to keep a first angle between the fixing mechanism and the aircraft arm; and when the aircraft is to be used, the connector is removed, and the fixing mechanism is attached to the aircraft arm through the third fastener, to keep a second angle between the fixing mechanism and the aircraft arm. In this way, the aircraft is simple in structure and easy in installation.

### BRIEF DESCRIPTION OF THE DRAWINGS

FIG. 1 is a first schematic diagram of a multi-rotor passenger-carrying aircraft with foldable aircraft arm in a wording state according to one embodiment of the present disclosure.
FIG. 2 is a second schematic diagram of a multi-rotor passenger-carrying aircraft with foldable aircraft arm in a wording state according to one embodiment of the present disclosure.
FIG. 3 is a first schematic diagram of a multi-rotor passenger-carrying aircraft with foldable aircraft arm in a folded state according to one embodiment of the present disclosure.
FIG. 24 a second schematic diagram of a multi-rotor passenger-carrying aircraft with foldable aircraft arm in a folded state according to one embodiment of the present disclosure.

### Description of reference signs:

1 fixing mechanism, 2 connector, 3 aircraft arm, 4 sleeve, 10 first fastener, 10a first mounting hole, 11 second fastener, 12 rotation shaft, 40a second mounting hole, and 100 aircraft body.

### DETAILED DESCRIPTION OF THE PREFERRED EMBODIMENTS

In the following description of embodiments, reference is made to the accompanying drawings which form a part hereof, and in which it is shown by way of illustration specific embodiments of the disclosure that can be practiced It is to be understood that other embodiments can be used and structural changes can be made without departing from the scope of the disclosed embodiments.

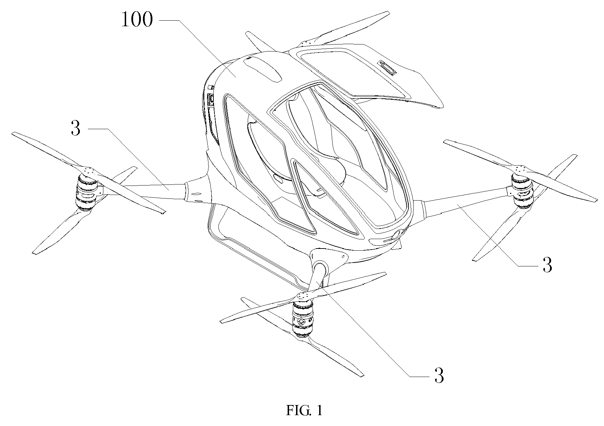

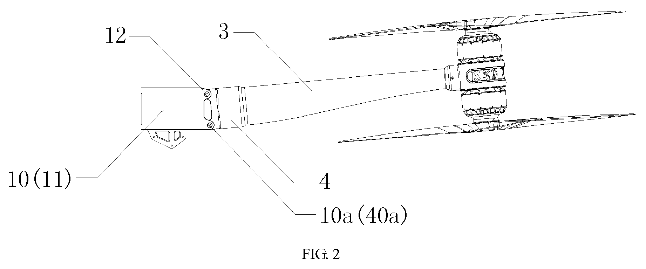

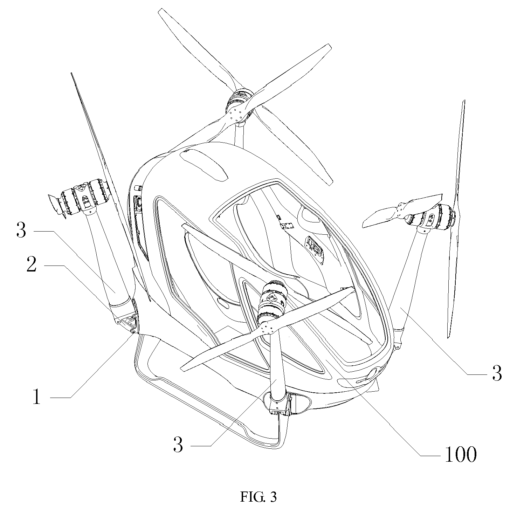

As shown in FIGS 1-4, a multi-rotor passenger-carrying aircraft with foldable aircraft arm is provided. The multi-rotor passenger-carrying aircraft with foldable aircraft arm includes an aircraft body 100, a fixing mechanism 1, a connector 2 and an aircraft arm 3, wherein the fixing mechanism 1 is fastened on the aircraft body 100, an end of the aircraft arm 3 is articulated to the fixing mechanism 1, the fixing mechanism 1 is provided with at least one first mounting hole 10a, the aircraft arm 3 is provided with at least one second mounting hole 40a; wherein when the aircraft arm 3 is in a folded state, one end of the connector 2 is removably attached to the fixing mechanism 1 through a first fastener, and the other end of the connector 2 is removably attached to the aircraft arm 3 through a second fastener, so that the fixing mechanism 1 is kept to be at a first angle with the aircraft arm 3; and wherein when the aircraft arm 3 is in a working state, a third fastener is adapted to pass through both the first and second mounting holes 10a, 40a, to cause the fixing mechanism 1 being kept to be at a second angle with the aircraft arm 3. For the above multi-rotor passenger-carrying aircraft with foldable aircraft arm, the aircraft arm 3 is articulated to the fixing mechanism 1 that the angle between the aircraft arm 3 and the fixing mechanism 1 is adjustable, to achieve switching of the aircraft arm 3 between the folded state and the working state. During the transportation and storage of the aircraft, the space occupied by the aircraft can be effectively reduced by mounting the connector 2 through the first and second fasteners to keep a first angle between the fixing mechanism 1 and the aircraft arm 3; and when the aircraft is to be used, the connector 2 is removed, and the fixing mechanism 1 is attached to the aircraft arm 3 through the third fastener, to keep a second angle between the fixing mechanism 1 and the aircraft arm 3. In this way, the aircraft is simple in structure and easy in installation.

In the embodiment, one end of the connector 2 is provided with a third mounting hole, and the first fastener is adapted to pass through both the first mounting hole 10a and the third mounting hole to cause the end of the fastener 2 is attached to the fixing mechanism 1; and the other end of the connector 2 is provided with a fourth mounting hole, and the second fastener is adapted to pass through both the second mounting hole 40a and the fourth mounting hole to cause the other end of the fastener 2 is attached to the aircraft arm 3. In this way, on additional opening is required, which reduces the manufacturing cost.

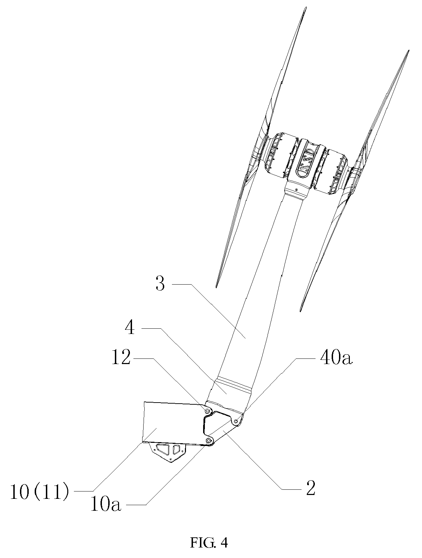

As shown in FIG. 4, the fixing mechanism 1 includes a first fastener 10 and a second fastener 11, the first fastener 10 and the second fastener 11 are arranged on the aircraft body 100 and spaced apart from each other, a rotation shaft 12 is connected between the first fastener 10 and the second fastener 11, and an end of the aircraft arm 3 is articulated to the rotation shaft 12. The aircraft arm 3 is articulated to the fixing mechanism 1 through a pin. In this way, the operation is reliable and the structure is easy to disassemble.

In the embodiment, the fixing mechanism is provided with two mounting holes 10a correspondingly arranged on the first fastener and the second fastener 10, 11 respectively. The first fastener is a pin. An end of the aircraft arm 3 is provided with a sleeve 4, two lugs are arranged on the bottom of the sleeve 4 and spaced apart from each other, and the aircraft arm is provided with two second mounting holes 40a correspondingly arranged on the two lugs respectively. The second fastener is a pin. During the transportation and storage of the aircraft, one end of the connector 2 is fastened on the fixing mechanism 1 through the pin, and the other end of the connector 2 is fastened on the aircraft arm 3 through the pin, which is easy to disassemble. The third fastener is a rivet. When the aircraft is to be used, the connector 2 is removed, and the fixing mechanism 1 is attached to the aircraft arm 3 through the rivet, with a reliable connection.

It can be understood that in other embodiments, the first fastener may be a rivet, bolt or any other suitable fastener, the second fastener may be a rivet, bolt or any other suitable fastener, and the third fastener may be a pin, bolt or any other suitable fastener, according to the actual conditions.

Technical features of the above embodiments can be combined arbitrarily. For simplify and clarity, not all of the possible combinations of the technical features of the above embodiments are described, however, these combinations should be considered within the scope of the description provided that there is no contradiction therebetween.

The above are preferred embodiments of the present disclosure described in detail, and should not be deemed as limitations to the scope of the present disclosure. It should be noted that variations and improvements will become apparent to those skilled in the art to which the present disclosure pertains without departing from its spirit and scope. Therefore, the scope of the present disclosure is defined by the appended claims.

## Claims

1. A multi-rotor passenger-carrying aircraft with foldable aircraft arm, comprises an aircraft body, a fixing mechanism, a connector and an aircraft arm, wherein the fixing mechanism is fastened on the aircraft body, an end of the aircraft arm is articulated to the fixing mechanism, the fixing mechanism is provided with at least one first mounting hole, the aircraft arm is provided with at least one second mounting hole; wherein when the aircraft arm is in a folded state, one end of the connector is removably attached to the fixing mechanism through a first fastener, and the other end of the connector is removably attached to the aircraft arm through a second fastener, so that the fixing mechanism is kept to be at a first angle with the aircraft arm; and when the aircraft arm is in a working state, a third fastener is adapted to pass through both the first and second mounting holes to cause the fixing mechanism to be fixedly connected to the aircraft arm and kept at a second angle with the aircraft arm.

2. The multi-rotor passenger-carrying aircraft with foldable aircraft arm of claim 1, wherein one end of the connector is provided with a third mounting hole, and the first fastener is adapted to pass through both the first mounting hole and the third mounting hole to cause the end of the fastener attached to the fixing mechanism; and the other end of the connector is provided with a fourth mounting hole, and the second fastener is adapted to pass through both the second mounting hole and the fourth mounting hole to cause the other end of the fastener attached to the aircraft arm.

3. The multi-rotor passenger-carrying aircraft with foldable aircraft arm of claim 1, wherein the fixing mechanism includes a first fastener and a second fastener arranged on the aircraft body and spaced apart from each other, a rotation shaft is connected between the first fastener and the second fastener, and an end of the aircraft arm is articulated to the rotation shaft.

4. The multi-rotor passenger-carrying aircraft with foldable aircraft arm of claim 3, wherein the fixing mechanism is provided with two mounting holes correspondingly arranged on the first fastener and the second fastener respectively.

5. The multi-rotor passenger-carrying aircraft with foldable aircraft arm of claim 1, wherein an end of the aircraft arm is provided with a sleeve, two lugs are arranged at the bottom of the sleeve and spaced apart from each other, and the aircraft arm is provided with two second mounting holes correspondingly arranged on the two lugs respectively.

6. The multi-rotor passenger-carrying aircraft with foldable aircraft arm of any one of claims 1-5, wherein the first fastener is a pin, rivet or bolt.

7. The multi-rotor passenger-carrying aircraft with foldable aircraft arm of any one of claims 1-5, wherein the second fastener is a pin, rivet or bolt.

8. The multi-rotor passenger-carrying aircraft with foldable aircraft arm of any one of claims 1-5, wherein the third fastener is a pin, rivet or bolt.
